# EUROPEAN PATENT APPLICATION

(11) **EP 4 556 997 A1**
(43) Date of publication of application: **21.05.2025**
(21) Application number: 24201623.6
(22) Date of filing: 20.09.2024
(51) Int. Cl.: G03B 17/56, G02B 27/00, B60R 1/23, B60S 1/08

(54) **LENS GUARD OF A SENSOR SYSTEM**

(30) Priority: 20.11.2023 US 202363600999 P; 22.07.2024 US 202418779484
(71) Applicant: Deere & Company, Moline, IL 61265 (US)
(72) Inventor: Bhushan, Prateek, Mannheim (DE); Issrani, Manoj, Mannheim (DE); Gupta, Manu, Mannheim (DE)
(74) Representative: Holst, Sönke

(57) **Abstract**

A lens guard of a sensor system that includes a film, a cleaning tool, and a roller. A sensor is configured to capture images within a field of view of a lens of the sensor through the film. The cleaning tool is configured to clean one or more surfaces of the film. Additionally, the roller is configured to move the film with respect to the lens and to guide the film to clean the one or more surfaces of the film with the cleaning tool.

## Description

This disclosure relates to a sensor system, and more particularly, to a lens guard of a sensor system.

### BACKGROUND

Sensor systems may be used in various agriculture operations to capture images for analysis of different parameters to determine overall performance of the various agriculture operations. Such sensor systems may be connected to agriculture machinery to capture images during operation of the machinery and analyze the captured images to enhance performance of the agriculture machinery.

### SUMMARY

In one aspect of the present disclosure, a lens guard of a sensor system is disclosed. The lens guard includes a film through which a sensor is configured to capture images within a field of view of a lens of the sensor. The cleaning tool is configured to clean one or more surfaces of the film. Additionally, the roller is configured to move the film with respect to the lens and guide the film to clean the one or more surfaces of the film with the cleaning tool.

In certain configurations, the film may include an inner surface that is configured to face the lens of the sensor and an opposing outer surface that is exposed to environmental elements. The cleaning tool may be configured to clean the opposing outer surface of the film.

In certain configurations, the film may be at least partially wound around the roller, and the roller may be configured to wind and unwind the film to move the film with respect to the lens. Additionally, the roller may be coupled to a drive system that is configured to rotate the roller to wind and unwind the film.

In certain configurations, the film may be configured to pass through a bezel of the sensor such that the film is positioned between the bezel and the lens.

In certain configurations, the field of view of the lens may be configured to extend through the film.

In certain configurations, a distance between the film and the lens may remain substantially constant during movement of the film.

In certain configurations, the film may include a first portion through which the sensor is configured to capture the images and a second portion connected to the first portion and located outside of the field of view of the lens. The roller may be configured to move the film so that the first portion is guided through the cleaning tool and the second portion is moved so that the sensor is configured to capture the images through the second portion.

In certain configurations, the roller may be configured to translate the film along a plane that is located adjacent to, and spaced apart from, the lens.

Another aspect of the present disclosure is a sensor system that includes a sensor and a lens guard. The sensor includes a housing and a lens disposed within the housing. The lens guard includes a film positioned adjacent to the lens such that the film encompasses a field of view of the lens, a roller operable to laterally move the film with respect to the sensor along a plane positioned substantially parallel to the housing of the sensor, and a cleaning tool. The film is controlled to pass through the cleaning tool when the roller moves the film so that one or more surfaces of the film are cleaned by the cleaning tool.

In certain configurations, the cleaning tool may be positioned between the lens of the sensor and the roller. Additionally, the cleaning tool may be a cleaning roller and the film may be configured to be guided along the roller to remove debris, moisture, or both from the one or more surfaces of the film.

In certain configurations, the sensor may further include a bezel coupled to the housing so that the lens may be positioned within a perimeter of the bezel. The film may extend through the bezel and may be positioned between the bezel and the lens. Additionally, the film may be configured to move through an opening of the bezel to be cleaned by the cleaning tool.

In certain configurations, the cleaning tool may be configured to rotate about an axis of rotation of the cleaning tool and the roller may be configured to rotate about an axis of rotation of the roller. The axis of rotation of the cleaning tool may be substantially parallel to the axis of rotation of the roller. Additionally, a direction of movement of the film may be substantially perpendicular to at least one of the axis of rotation of the cleaning tool or the axis of rotation of the roller.

Another aspect of the present disclosure is a sensor system that includes a sensor and a lens guard. The sensor includes a lens and is configured to capture images within a field of view of the lens. The lens guard includes a film positioned adjacent to the lens through which the lens is configured to capture the images, set of rollers operable to laterally move the film with respect to the lens, wherein the film is at least partially wound on the set of rollers, and set of cleaning tools, wherein the set of rollers is configured to move the film so that one or more surfaces of the film are cleaned by the cleaning tool.

In certain configurations, the set of rollers may include a first roller and a second roller. The first roller and the second roller may be positioned on opposing sides of the sensor. Additionally, the set of cleaning tools may include a first cleaning tool and a second cleaning tool. The first cleaning tool and the second cleaning tool may be positioned on the opposing sides of the sensor between the first roller and the second roller.

In certain configurations, the set of rollers may be coupled to a drive system that is configured to rotate the set of rollers to move the film with respect to the lens.

Another aspect of the present disclosure is a method of cleaning a film of a sensor guard of a sensor system. The method includes capturing, via a sensor of the sensor system, images within a field of view of a lens of the sensor. The sensor is configured to capture the images within the field of view through a first portion of the film. The method also includes determining, via the sensor system, whether the first portion of the film requires cleaning. Additionally, responsive to determining that the first portion of the film requires cleaning, the method includes moving the film so that the first portion of the film is cleaned by a cleaning tool of the sensor guard and a second portion of the film is moved so that the sensor is configured to capture the images within the field of view through the second portion of the film.

In certain configurations, prior to moving the film, the method includes determining, via the sensor system, a last cleaning time of the film. Additionally, the method includes determining, via the sensor system, whether the last cleaning time surpasses a threshold. If the sensor system determines that the last cleaning time does not surpass the threshold, the sensor system determines that the first portion of the film requires cleaning. Additionally, responsive to the sensor system determining that the last cleaning time surpasses the threshold, the method includes providing, via a user interface, an alert to a user of the sensor system.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is a side view of an exemplary machine that includes a sensor system.
FIG. 2A is a perspective view of a sensor system that includes a lens guard.
FIG. 2B is a cross-sectional view of the sensor system of FIG. 2A.
FIG. 2C is a cross-sectional view of the sensor system of FIG. 2A.
FIG. 3 is a flowchart of an example of a process for operation of a lens guard of a sensor system.

### DETAILED DESCRIPTION

The present disclosure relates to a sensor system for use with various machinery. The sensor system may be configured for use with agricultural machinery, construction equipment, automotive vehicles, or a combination thereof. By way of example, the sensor system may be configured for use with agricultural machinery, such as a planter machine configured to plant various seeds or a sprayer machine configured to apply a product to various plants.

The sensor system may be configured to detect or analyze a region surrounding the machinery (e.g., the agricultural machinery) being operated. The sensor system may detect objects, movement, environmental conditions, other parameters, or a combination thereof that may be analyzed to determine the performance of the associated machinery. The sensor system may not be limited to any particular type of sensing system. For example, the sensing system may include one or more sensors that may be configured to capture images and/or videos within a field of view of a lens of the sensors (e.g., in the region surrounding the machinery), may be configured to detect environmental conditions (e.g., temperature, humidity, wind, etc.), may be configured to detect operating conditions of the machinery (e.g., movement of the machinery, machinery degradation, etc.), or a combination thereof.

Conventional sensor systems may be coupled to the machinery being operated in a manner that exposes the sensor systems to environmental elements. For example, the sensor systems may be coupled to an exterior of a frame of the machinery. As a result, the one or more sensors of the sensor systems may degrade over time due to the environmental elements, such as debris (e.g., dust, objects that may impact the sensors, etc.), moisture (e.g., fog, humidity, rain, snow, etc.), or both. Similarly, the environmental elements may impair or obstruct the field of view of the lenses of one or more sensors, thereby impacting operations of the sensor systems. For example, debris or moisture on a lens of the one or more sensors may obstruct the one or more sensors from accurately capturing images and/or videos within the field of view of the lens. Additionally, due to the mounting locations of the sensor systems, it may be difficult to clean the one or more sensors or otherwise maintain a clear field of view for the lenses of the one or more sensors.

The present teachings provide a sensor system that addresses the aforementioned challenges. The sensor system as described herein may advantageously be configured to prevent degradation or obstruction of one or more sensors within the sensor system. The sensor system may include a lens guard that is configured to protect the one or more sensors from environmental elements. Additionally, the lens guard may include a cleaning tool that is configured to clean all or a portion of the lens guard to remove debris and/or moisture from the lens guard, thereby further ensuring that the field of view of the lenses of the one or more sensors remains unobstructed and preventing degradation of the one or more sensors.

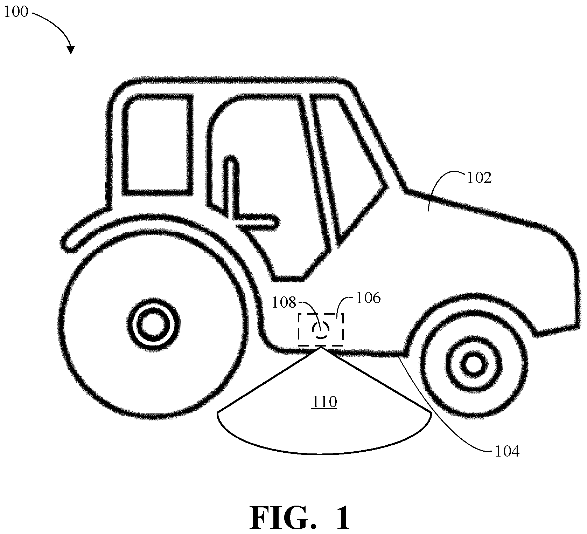

Turning now to the figures, FIG. 1 illustrates a side view of a machine 100 in accordance with the present teachings. The machine 100 may include a body 102 and a frame 104. The frame 104 may form part of the body 102 or may support the body 102 of the machine 100. Additionally, the machine 100 may include a sensor system 106. As discussed above, the machine 100 is not particularly limited to any specific type of machinery. For example, the machine 100 may be a vehicle, equipment, other object, or a combination thereof. The machine 100 may be configured for operation in any type of industry including agriculture, food and beverage, transportation, construction, entertainment, or a combination thereof. By way of example, as shown in FIG. 1, the machine 100 may be a tractor or an agriculture machine.

The sensor system 106 may be coupled to the machine 100 so that one or more sensors of the sensor system 106, such as the sensor 108, may be positioned to monitor or otherwise interact with an area around the machine 100. The sensor system 106 may be coupled to the body 102 or the frame 104 of the machine 100. By way of example, the sensor system 106 may be coupled to the frame 104 of the machine 100, such as along an outer region or outer surface of the frame 104. The sensor system 106 may be coupled to the frame 104 so that a field of view 110 of the sensor 108 (e.g., a field of view of a lens of the sensor 108) may extend outboard with respect to the machine 100 along the ground beneath the machine 100. It should be noted that the field of view 110 of the sensor 108 may be positioned in any desired manner by adjusting the mounting of the sensor system 106 along the machine 100. That is, the field of view 110 may be configurable to capture any desired region around the machine 100, which may include parts or components of the machine 100 (e.g., tires, chassis, frame, etc.).

For example, the machine 100 may be a planter machine that may be configured to plant various seeds throughout a field. Alternatively, the machine 100 may be a sprayer machine that may be configured to apply a topical spray to existing plants within a field, such as an insecticide or weed control treatment. In such cases, the sensor system 106 may be coupled to the machine 100, such as along the frame 104, so that the field of view 110 of the sensor 108 may extend beneath the machine 100 to monitor the ground in which the machine 100 is either planting seeds or applying the topical spray. As a result, the sensor 108 may be positioned to monitor operation (e.g., capture sensor data associated with the operation) of the machine 100 so that the quality of performance of the machine 100 can be determined, such as by monitoring consistency in planting of the seeds or uniform topical spray application. The sensor 108 may capture the sensor data associated with the operation, which may then be evaluated by the sensor system 106 (e.g., a computing device within the sensor system 106) or a device in communication with the sensor system 106 (e.g., a computing device or system of the machine 100 in communication with the sensor system 106) to determine the quality of performance of the machine 100.

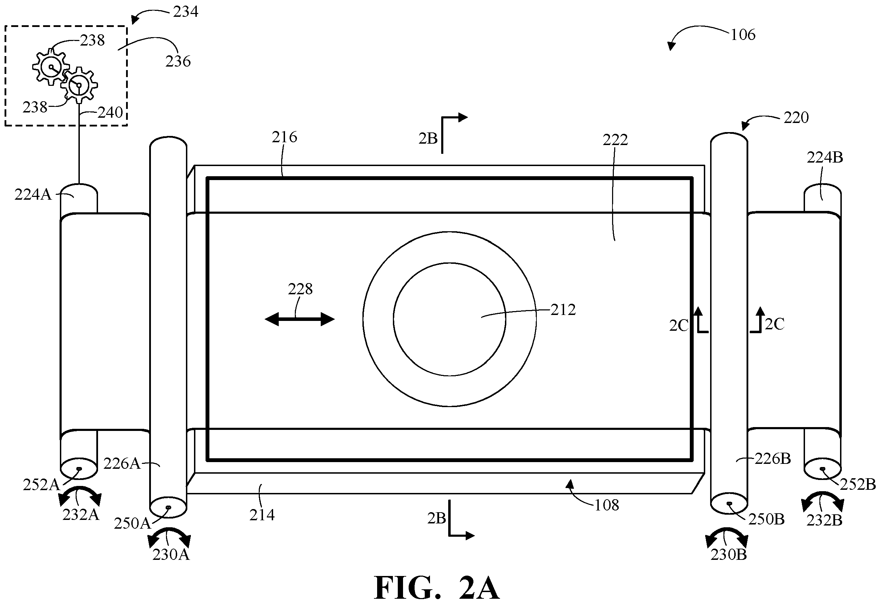

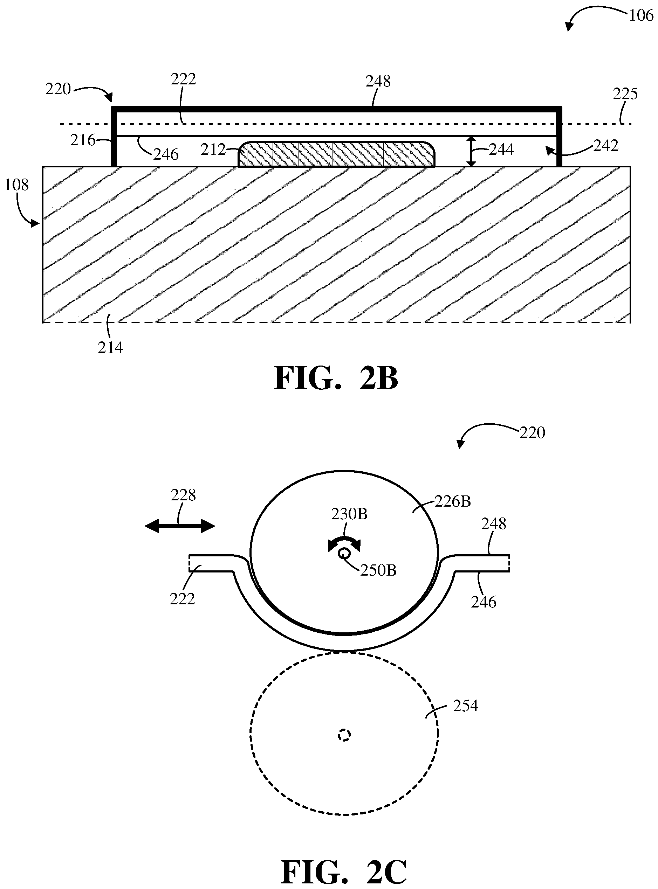

FIG. 2A illustrates a perspective view of the sensor system 106. The sensor system 106 may be a sensor system of an agriculture machine, such as the machine 100. Additionally, FIG. 2B is the cross-sectional view 2B of the sensor system 106 shown in FIG. 2A. Moreover, FIG. 2C is the partial cross-sectional view 2C of the sensor system 106 shown in FIG. 2A.

As discussed above, the sensor system 106 may include the sensor 108. The sensor 108 may include a lens 212 that may be disposed within a housing 214 of the sensor 108. The lens 212 may at least partially project from the housing 214. For example, the lens 212 may extend outboard from a surface of the housing 214 so that the field of view 110 discussed above is not obstructed by the housing 214. The lens 212 may be configured such that the sensor system 106 (e.g., an image capture device therein) captures images within the field of view 110 of the lens 212. Such images may be still images or videos so that the sensor system 106, independently or in conjunction with a computing system, may analyze the images or videos to determine the overall performance of the machine 100.

The sensor 108 may be configured for various types of sensing operations and is not limited to capturing images in the field of view 110. For example, the sensor 108 may be or may include a proximity sensor, an accelerometer, a temperature sensor, a pressure sensor, a photodetector, an image sensor, a hall effect sensor, a humidity sensor, an infrared sensor, another type of sensor, or a combination thereof. As such, the sensor 108 may be configured to detect various parameters in any desired manner (e.g., image capturing, infrared sensing, magnetism measurement, etc.).

The sensor 108 may further include a bezel 216 coupled to the housing 214. The lens 212 may be positioned within a perimeter of the bezel 216. The bezel 216 may be coupled to, and project from, a surface (e.g., an exterior surface) of the housing 214 beyond the lens 212 to at least partially protect the lens 212. For example, the bezel 216 may have an overall frame that is configured to contain the lens 212 so that, for example, if a projectile is directed towards the lens 212, the bezel 216 may deflect the projectile and prevent damage to the lens 212. The bezel 216 may vary is size and/or shape based on the geometry of the sensor 108 and/or the geometry of the housing 214. The bezel 216 may be configured to mount to the housing 214 in such a manner that the field of view 110 of the sensor 108 remains unobstructed by the bezel 216. For example, the bezel 216 may be an open frame.

The sensor system 106 may also include a lens guard 220 that may be configured to further protect the sensor 108, and in particular, the lens 212 of the sensor 108. The lens guard 220 may be configured to prevent moisture and/or debris from contacting the lens 212 therewith preventing obstruction of the field of view 110 of the sensor 108. Obstructions of the field of view 110 may impact the overall accuracy of the sensor 108. The lens guard 220 may include one or more components that may be coupled to the sensor 108 or may be coupled to the machine 100. That is, the lens guard 220 may work in conjunction with the sensor 108 and may be free of direct mounting to the sensor 108. The lens guard 220 may thus be removed and/or replaced without impacting the sensor 108. For example, the lens guard 220 may be disconnected from the machine 100 for replacement or repair without disconnecting the sensor 108 from the machine 100.

The lens guard 220 may include a film 222 through which the sensor system 106 may be configured to capture images within the field of view 110 of the lens 212 of the sensor 108. For example, the sensor 108 may be or may include an image capture device that may capture images that are within the field of view of the lens 212 of the sensor 108. The film 222 may be transparent and positioned adjacent to the lens 212 such that the field of view 110 of the lens 212 extends through the film 222. As a result, the image capture device of the sensor 108 may capture images through the lens 212 and through the film 222.

As shown in FIG. 2B, the film 222 may include an inner surface 246 that is configured to face the lens 212 of the sensor 108 and an opposing outer surface 248 that may be exposed to environmental elements. That is, the outer surface 248 may extend outboard from the sensor 108 and may be positioned further away from the lens 212 when compared to the inner surface 246. As a result, the outer surface 248 may be directly exposed to the environmental elements around the machine 100. Such environmental elements may include the aforementioned debris and/or moisture. As a result, the environmental elements (e.g., the debris and/or moisture) may contact the outer surface 248 of the film 222, which in turn prevents such environmental elements from reaching the lens 212 of the sensor 108.

The film 222 may be flexible. The film 222 may be hydrophobic or superhydrophobic. The film 222 may be transparent or tinted. Additionally, the film 222 is not particularly limited to any type of material. For example, the film 222 may be a polyethylene film (e.g., low-density polyethylene (LDPE), high-density polyethylene (HDPE), etc.), a polypropylene film, a polyester film, a nylon film, an ethylene vinyl alcohol (EVOH) film, a biodegradable film, or a combination thereof. Additionally, the film 222 may be reinforced with one or more additives to improve the overall structural integrity of the film 222.

The film 222 may be configured to pass through the bezel 216 of the sensor 108 so that the film may be positioned between the bezel 216 and the lens 212. As such, the film 222 may be positioned so that the field of view 110 of the sensor 108 may be configured to extend through the film 222 so that the film 222 encompasses the field of view 110. While a position of the film 222 is not particularly limited, the film 222 may be spaced a distance 244 apart from the housing 214 of the sensor 108, as shown in FIG. 2B. The distance 244 may be measured between the film 222 and an outer surface of the housing 214 substantially orthogonal to the housing 214. As such, the distance 244 between the film 222 and the lens 212 may be adjusted so that the film 222 is positioned adjacent to the lens 212 so that the film 222 encompasses the field of view 110 of the lens 212. The film 222 may be in contact with the lens 212 or the film 222 may be spaced apart from the lens 212 a desired distance (e.g., based on the distance 244 between the film 222 and the lens 212) therewith accommodating possible movement of the lens 212 (e.g., tilting and/or zooming of the lens 212). That is, the film 222 may be positioned adjacent to the lens 212 so that the sensor system 106 may be configured to capture images through the lens 212 and the film 222.

The lens guard 220 may also include one or more rollers, such as a set of rollers that may be operable to laterally move the film 222 with respect to the lens 212. By way of example, the set of rollers of the lens guard 220 may include a first roller 224A and a second roller 224B. As shown in FIG. 2A, the first roller 224A and the second roller 224B may be positioned on opposing sides of the sensor 108. The first roller 224A and/or the second roller 224B may be configured to laterally move the film 222 with respect to the sensor 108 along a plane positioned substantially parallel to the housing 214 of the sensor 108, such as the plane 225 shown in FIG. 2B. The first roller 224A and/or the second roller 224B may be configured to translate the film 222 along a plane (e.g., the plane 225) that is located adjacent to, and spaced apart from, the lens 212. However, the film 222 may be moved by the first roller 224A and/or the second roller 224B at any desired orientation with respect to the sensor 108.

The film 222 may be at least partially wound around the first roller 224A and/or the second roller 224B so that the first roller 224A and/or the second roller 224B may be configured to wind and unwind the film 222 to move the film 222 with respect to the lens 212. Additionally, the first roller 224A and/or the second roller 224B may be coupled to a drive system 234 that may be configured to rotate the first roller 224A and/or the second roller 224B. That is, the first roller 224A and/or the second roller 224B (e.g., the set of rollers) may be coupled to the drive system 234 that may be configured to rotate the first roller 224A and the second roller 224B to move the film 222 with respect to the lens 212.

The drive system 234 may be any drive mechanism that may rotate the first roller 224A and the second roller 224B. For example, the drive system 234 may be configured to rotate the first roller 224A in a direction 232A and rotate the second roller 224B in a direction 232B. The first roller 224A may rotate about an axis of rotation 252A and the second roller 224B may rotate about an axis of rotation 252B. As shown in FIG. 2A, the axis of rotation 252A of the first roller 224A may be substantially parallel to the axis of rotation 252B of the second roller 224B. The drive system 234 may include a motor 236 that includes, or is in communication with, one or more gears 238. The gears 238 may be driven by the motor 236 to drive a cable 240 coupled to the first roller 224A and/or the second roller 224B. As a result, the cable 240 may in turn drive (e.g., rotate) the first roller 224A and/or the second roller 224B. The drive system 234 may include any type of motor, such as an AC or a DC motor, a direct-drive motor, a brushed or brushless motor, or a combination thereof. Therefore, the drive system 234 may be coupled to the first roller 224A and/or the second roller 224B in any manner that facilitates rotation of the first roller 224A and/or the second roller 224B. For example, instead of the cable 240, the motor 236 may include or be coupled to a spindle connected to the first roller 224A. The motor 236 may drive the spindle to rotate the first roller 224A in the direction 232A.

The lens guard 220 may further include one or more cleaning tools, such as a set of cleaning tools, that are configured to clean one or more surfaces (e.g., the inner surface 246 and/or the outer surface 248) of the film 222. By way of example, the set of cleaning tools may include a first cleaning tool 226A and a second cleaning tool 226B. The first cleaning tool 226A and the second cleaning tool 226B may be positioned on opposing sides of the sensor 108 between the first roller 224A and the second roller 224B. However, the first cleaning tool 226A and the second cleaning tool 226B may be positioned anywhere with respect to the sensor 108 and may be oriented with respect to the film 222 in any desired manner. For example, the first cleaning tool 226A and the second cleaning tool 226B may be positioned or may extend substantially perpendicularly to the direction 228 of movement of the film 222.

The set of rollers (e.g., the first roller 224A and/or the second roller 224B) may be configured to move the film 222 in a direction 228 so that one or more surfaces (e.g., the inner surface 246 and/or the outer surface 248) of the film 222 may be cleaned by the first cleaning tool 226A and/or the second cleaning tool 226B. That is, the film 222 may be configured to pass through or along the first cleaning tool 226A and/or the second cleaning tool 226B when the first roller 224A and/or the second roller 224B moves the film 222 so that the one or more surfaces of the film 222 may be cleaned by the first cleaning tool 226A and/or the second cleaning tool 226B.

As shown in FIG. 2C, the first cleaning tool 226A and/or the second cleaning tool 226B may be configured to clean the outer surface 248 of the film 222 to remove debris, moisture, or both from the outer surface 248. As discussed in further detail below, the sensor system 106 may be configured to detect when debris and/or moisture on the outer surface 248 may be obstructing the field of view of the sensor 108. As a result, the sensor system 106 may trigger activation of the lens guard 220 to clean the film 222. That is, the first roller 224A and/or the second roller 224B may be configured to move the film 222 with respect to the lens 212 of the sensor 108 and guide the film 222 along the first cleaning tool 226A and/or the second cleaning tool 226B to clean the one or more surfaces (e.g., the outer surface 248) of the film 222.

To facilitate the cleaning operation, the first cleaning tool 226A may be positioned between the lens 212 of the sensor 108 and the first roller 224A. Similarly, the second cleaning tool 226B may be positioned between the lens 212 and the second roller 224B. The film 222 may be configured to move through an opening 242 of (e.g., a slit, gap, space, etc.) of the bezel 216 to be cleaned by the first cleaning tool 226A and/or the second cleaning tool 226B. The first roller 224A and/or the second roller 224B may be configured to move the film 222 in a direction 228 laterally along the sensor 108 between and beyond opposing sides of the sensor 108. Such movement in the direction 228 may be reversible so that the film 222 may move from
left-to-right or right-to-left with respect to FIGS. 2A and 2C. For example, the film 222 may be moved in the direction 228 to wind the film 222 around the first roller 224A until the lens guard 220 or the sensor system 106 determines that the film 222 can no longer be wound around the first roller 224A (e.g., the film 222 has been fully unwound from the second roller 224B), at which point the direction 228 of movement of the film 222 may be reversed to wind the film 222 around the second roller 224B. It should be noted that the distance 244 between the film 222 and the housing 214 - and thus the distance between the film 222 and the lens 212 - remains substantially constant during movement of the film 222.

The first cleaning tool 226A and/or the second cleaning tool 226B may be positioned anywhere with respect to the film 222 to clean the film 222. The first cleaning tool 226A and/or the second cleaning tool 226B may be any type of cleaning device that may facilitate cleaning the outer surface 248 and/or the inner surface 246 of the film 222. For example, the first cleaning tool 226A and/or the second cleaning tool 226B may each be a cleaning roller, and the film 222 may be configured to be guided along the rollers to remove debris, moisture, or both from the one or more surfaces of the film 222.

The first cleaning tool 226A and/or the second cleaning tool 226B may include one or more bristles, one or more brushes, one or more sponges, one or more scrapers, or a combination thereof to remove the debris and/or moisture from the film 222. As such, the first cleaning tool 226A and/or the second cleaning tool 226B may be any configuration to effectively clean the film 222. Additionally, it should be noted that while FIG. 2A illustrates that the first cleaning tool 226A and the second cleaning tool 226B are cleaning only the outer surface 248 of the film 222, other configurations are possible. For example, as shown in FIG. 2C, the film 222 may pass through the second cleaning tool 226B and a secondary cleaning tool 254 that is spaced apart from the second cleaning tool 226B. As a result, the outer surface 248 may be cleaned by the second cleaning tool 226B and the inner surface 246 may be cleaned by the secondary cleaning tool 254. Such a configuration may also be possible with the first cleaning tool 226A.

The first cleaning tool 226A may be configured to rotate about an axis of rotation 250A in a direction 230A. The second cleaning tool 226B may be configured to rotate about an axis of rotation 250B in a direction 230B. The axis of rotation 250A of the first cleaning tool 226A may be substantially parallel to the axis of rotation 252A of the first roller 224A and/or the axis of rotation 252B of the second roller 224B. The axis of rotation 250B of the second cleaning tool 226B may be substantially parallel to the axis of rotation 252A of the first roller 224A and/or the axis of rotation 252B of the second roller 224B. Additionally, as shown in FIGS. 2A and 2C, the direction 228 of movement of the film 222 may be substantially perpendicular to the axis of rotation 250A of the first cleaning tool 226A, the axis of rotation 250B of the second cleaning tool 226B, the axis of rotation 252A of the first roller 224A, and the axis of rotation 252B of the second roller 224B. However, the direction 228 of movement of the film 222 may also be parallel or form any angle with the axes of rotation described above.

Based on the foregoing, the lens guard 220 may be configured to provide a protective shielding of the sensor 108 via the film 222 to ensure that the field of view 110 of the sensor 108 is unobstructed by debris and/or moisture. By way of example, the film 222 may include a first portion through which the sensor system 106 (e.g., an image capture device of the sensor system 106) is configured to capture the images and a second portion that is connected to the first portion and located outside of the field of view of the lens 212 of the sensor 108. For example, the second portion of the film 222 may be a portion of the film 222 that is at least partially wound around the first roller 224A or the second roller 224B. The first roller 224A and/or the second roller 224B may be configured to move the film 222 (e.g., via the drive system 234) so that the first portion is guided through the first cleaning tool 226A and/or the second cleaning tool 226B. Additionally, the second portion of the film 222 may be moved so that the lens 212 may be configured to capture the images through the second portion.

That is, the first portion of the film 222 that may be initially positioned over the lens 212 may be moved in the direction 228 outside of the field of view 110 to be cleaned by the first cleaning tool 226A and/or the second cleaning tool 226B. The first portion may then continue toward the first roller 224A or the second roller 224B and wind around the first roller 224A or the second roller 224B so that the second portion of the film 222 is now positioned over the lens 212 such that the field of view 110 of the sensor 108 may extend through the second portion of the film 222. That is, the first portion of the film 222 that may be degraded (e.g., dirty) may be moved outside of the field of view 110 and the second portion of the film 222 that remains clean and free of moisture and/or debris may be moved to cover the field of view 110. Such a process may be continuously repeated and/or reversed to clean the film 222 and ensure that the field of view 110 of the sensor 108 remains unobstructed.

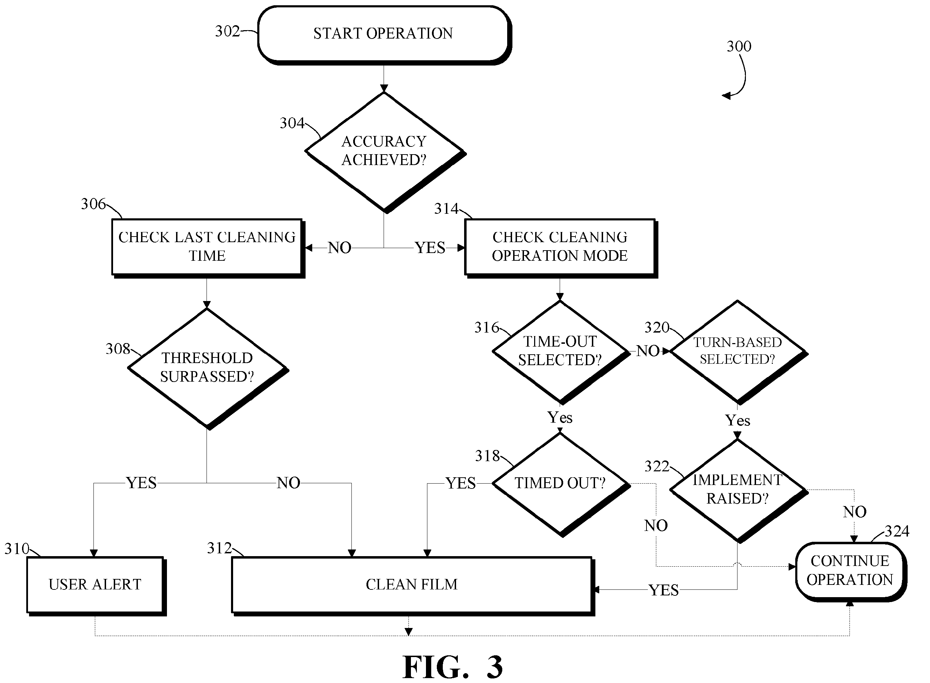

FIG. 3 illustrates a flowchart of an example of a process 300 for operation of the lens guard 220 of the sensor system 106. The process may be applicable to the lens guard 220 illustrated in FIGS. 2A-2C. Additionally, the process may also be applicable to a lens guard similar to the lens guard 220 discussed above. In other words, the process 300 may be completed by the lens guard 220 described above. The process 300 can be performed, for example, by executing a machine-readable program or other computer-executable instructions, such as routines, instructions, programs, or other code. The steps, or operations, of the process 300 may be implemented directly in hardware, firmware, software executed by hardware, circuitry, or a combination thereof. The process 300 can be executed by a processor (not shown) associated with or included in the sensor system 106. The process 300 can also be executed by a processor (not shown) of a system in communication with the sensor system 106, such as a system of the machine 100.

Initial operation of the lens guard 220 and the sensor system 106 may begin at operation 302. Additionally, operation of the machine 100 may begin at the operation 302. During initial operation, the sensor 108 may begin operation (e.g., image capturing) within the field of view 110. While the sensor 108 is operating(e.g., capturing images), accuracy of operation of the machine 100 may be determined at operation 304. That is, performance of the machine 100 during an operation of the machine 100, such as planting of seeds or topical spray application, may be determined at the operation 304. Performance of the machine 100 may be determined at the operation 304 based upon review of the images captured by the sensor system 106 (.g., review by the sensor system 106, a controller of or connected to the sensor system 106, a system of the machine 100, etc.), review of the operation of the machine 100 using additional systems of the machine 100, or both.

For example, the sensor system 106 or an additional system of the machine 100 may evaluate the performance of the operation (e.g., depth of planting the seeds, spraying accuracy, etc.) of the machine 100 to determine if there has been any degradation. The above determination at the operation 304 may be based upon one or more parameters, one or more predefined thresholds, one or more calculations, or a combination thereof.

The sensor system 106 or an additional system of the machine 100 may also evaluate the clarity of the images captured by the sensor system 106. That is, the sensor system 106 or an additional system of the machine 100 may be configured to analyze the images captured by the sensor system 106 to determine if the images are sufficiently clear and/or within focus to use in the operation of the machine 100. Such determination of clarity and/or focus of the images captured may be based on or more predetermined parameters, one or more predefined thresholds, one or more calculations, or a combination thereof.

The accuracy of the performance of the machine 100 may be correlated to clarity of the images captured by the sensor system 106. That is, if the film 222 remains unobstructed by moisture and/or debris, the machine 100 may continue to operate accurately (e.g., maintain depth of planting the seeds, accurately spray selected areas, etc.). If the film 222 becomes obstructed by moisture and/or debris, the accuracy of the machine 100 may decrease. For example, the images captured by the sensor system 106 may be used by the machine 100 to determine and/or maintain the depth of planting seeds. When the lens 212 is obstructed due to moisture and/or debris on the film 222, the clarity of the images captured by the sensor system 106 may decrease, and thus the depth of planting the seeds may no longer be accurately determined, resulting in inconsistent planting depths.

If the target or threshold accuracy is not achieved, the sensor system 106 may check the last cleaning time of the lens guard 220 at operation 306. The last cleaning time of the film 222 may be determined at the operation 306 using the first cleaning tool 226A and/or the second cleaning tool 226B. The last cleaning time of the lens guard 220 may be the last time a cleaning operation was completed using the first cleaning tool 226A and/or the second cleaning tool 226B. The last cleaning time determined at the operation 306 may also be the duration of time taken to clean the lens guard 200. Such a duration of time may be a time interval for cleaning the film 222 (e.g., number of second or minutes to clean the film 222) or may be the number of times cleaning of the film 222 was completed in a set time interval. For example, the last cleaning time at the operation 306 may be determined as the number of rotations of the first cleaning tool 226A and/or the second cleaning tool 226B within a set duration of time.

Once the last cleaning time of the film 222 is determined at the operation 306, the sensor system 106 may determine if the last cleaning time surpasses a predefined or otherwise established threshold at operation 308. For example, the threshold may be predefined as the number of times a cleaning operation of the film 222 (e.g., rotation of the first cleaning tool 226A and/or rotation of the second cleaning tool 226B) is completed within an established time interval.

If the threshold is surpassed at the operation 308 (e.g., the number of times a cleaning operation of the film 222 is completed in the predefined time interval surpasses the threshold number of times of the cleaning operation), a user of the machine 100 and the sensor system 106 may be alerted at operation 310. Such an alert at the operation 310 may be provided to the user via a user interface of the machine 100 (e.g., a display screen), tactile feedback (e.g., a vibration within the machine 100), audible feedback (e.g., a beep or other noise), or a combination thereof to alert the user of the performance issues of the sensor system 106. Once the user alert has been provided at the operation 310, operation of the sensor system 106 and/or operation of the machine 100 may continue at operation 324 until the user interacts to evaluate, repair, and/or replace the sensor 108 (e.g., replace the lens 212). Alternatively, once the user alert has been provided at the operation 310, operation of the sensor system 106 and/or operation of the machine 100 may be stopped until the user interacts to evaluate, repair, and/or replace the sensor (e.g., replace the lens 212).

If the last cleaning time threshold is not surpassed at the operation 308, cleaning of the film 222 may be completed at operation 312. For example, the first roller 224A and/or the second roller 224B may be directed (e.g., actuated) to complete a pre-defined rotation about their axes of rotation (e.g., the axis of rotation 252A of the first roller 224A and the axis of rotation 252B of the second roller 224B) to guide the film 222 through the first cleaning tool 226A and/or the second cleaning tool 226B to clean the film 222 of any debris and/or moisture. Such cleaning at the operation 312 may be based upon any desired amount of rotation of the first roller 224A and/or the second roller 224B to properly clean the film 222 and ensure the field of view 110 of the sensor 108 remains unobstructed. Once the cleaning of the film 222 is completed at the operation 312, operation of the sensor system 106 and/or operation of the machine 100 may continue at the operation 324, at which point the process 300 may be repeated. That is, the operation 324 may be treated similar to the initial start operation at the operation 302.

Referring back to the operation 304, if the desired or threshold accuracy for performance of the sensor system 106 is achieved (e.g., performance is determined to be above the pre-defined threshold based on one or more parameters), the sensor system 106 or a system of the machine 100 in communication with the sensor system 106 may determine the current cleaning operation mode of the sensor system 106 at operation 314. That is, a user may select a desired cleaning operation mode for the lens guard 220, such as by input through a user-interface of the machine 100, input through a remote device (e.g., a connected mobile device such as a phone or tablet), input through another manner, or a combination thereof.

The user may be able to select from a variety of cleaning operation modes of the lens guard 220. By way of example, the user may select time-out operation mode of the lens guard 220 that may establish a desired cleaning interval of the film 222. That is, the user may select the time-out operation mode so that the film 222 may be cleaned on a pre-defined time interval (i.e., schedule). Alternatively, the user may be able to specify the desired time interval (e.g., through the interface of the machine 100) upon selection of the time-out operation mode.

Additionally, the user may be able to select a turn-based operation mode for cleaning the film 222 of the lens guard 220. Such a mode may be configured to clean the film 222 of the lens guard 220 based upon a pre-defined trigger. For example, the turn-based operation mode may be configured to clean the film 222 after each pass of the machine 100 during planting of seeds or spraying of existing plants. That is, the machine 100 may be configured to move in rows through a field, where each traveled span across the field may be considered a pass. When the pass is completed, the machine 100 may turn off or otherwise move one or more components (e.g., tools) of the machine 100 until the next pass. As a result, the sensor system 106 may be configured to detect such a completed pass and automatically trigger cleaning of the film 222. It should also be noted that any trigger or threshold may be established for the turn-based operation mode that may activate cleaning of the film 222 based upon an operation status of the machine 100. In another example, the film 222 may be cleaned on-demand. That is, at any time during the operations of the sensor system 106, the user may cause the cleaning operation to be performed by selecting a command in a user interface associated with the sensor system 106 or the lens guard 220 or otherwise usable for controlling the lens guard 220. The command causes an actuation command to be transmitted to the first roller 224A and/or the second roller 224B. The actuation command may be received by the sensor system 106, which in turn causes the operation 312 to be performed.

After the cleaning operation mode is checked at the operation 314, the sensor system 106 may first determine at operation 316 if the time-out operation mode has been selected. If the sensor system 106 determines at the operation 316 that the time-out operation mode has been selected, the sensor system 106 may begin monitoring the predefined or established time interval for cleaning the film 222 at operation 318. That is, the sensor system 106 may monitor the time interval to determine when the sensor system 106 reaches a time-out point, at which point cleaning of the film 222 may be initiated at the operation 312 as discussed above. After cleaning of the film 222 at the operation 312, operation of the sensor system 106 may continue at the operation 324. If the time-out point has not yet been reached at the operation 318, the process 300 proceeds to the operation 324 or continue to actively monitor the time interval at the operation 316 until the time-out point has been reached.

If it is determined at the operation 316 that the time-out operation mode has not been selected, the sensor system 106 may then determine at operation 320 that the turn-based operation mode has been selected by the user. If the turn-based operation mode has been selected, the sensor system 106 starts monitoring at operation 322 whether an implement (e.g., a tool) of the machine 100 has been raised to indicate a completed turn (e.g., pass) of the machine 100, at which time the film 222 may be cleaned at the operation 312. Once cleaning is completed at the operation 312, the sensor system 106 may continue its operation at the operation 324. It should be noted that a raised implement being determined at the operation 322 is but one example of a trigger of the sensor system 106 within the turn-based operation mode, and any number of other triggers may be monitored at the operation 320 to achieve a similar result. Additionally, if it is not determined at the operation 322 that the implement has been raised, the sensor system 106 may continue to monitor the machine 100 and operation thereof until the trigger has been established. Similarly, if the trigger has not yet been activated at the operation 322, the sensor system 106 may continue operation at the operation 324.

The process 300 is but one example of a process for actively monitoring and using the lens guard 220 to clean the film 222. The lens guard 220 and the sensor system 106 may also be configured for a variety of other processes, which may include one or more of the above operations or may include additional operations. For example, and as already mentioned, the lens guard 220 may be configured to activate cleaning of the film 222 manually via a user inputting a command through a user interface. Additionally, cleaning of the film 222 may be activated based upon detection of environmental conditions or elements, such as high winds or rain. Therefore, the lens guard 220 and cleaning of the film 222 is not particularly limited to any specific operation mode or process and may be adapted for a variety of machines and industries.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

Persons skilled in the art will understand that the various embodiments of the present disclosure and shown in the accompanying figures constitute non-limiting examples, and that additional components and features may be added to any of the embodiments discussed hereinabove without departing from the scope of the present disclosure. Additionally, persons skilled in the art will understand that the elements and features shown or described in connection with one embodiment may be combined with those of another embodiment without departing from the scope of the present disclosure to achieve any desired result and will appreciate further features and advantages of the presently disclosed subject matter based on the description provided. Variations, combinations, and/or modifications to any of the embodiments and/or features of the embodiments described herein that are within the abilities of a person having ordinary skill in the art are also within the scope of the present disclosure, as are alternative embodiments that may result from combining, integrating, and/or omitting features from any of the disclosed embodiments.

Use of the term "optionally" with respect to any element of a claim means that the element may be included or omitted, with both alternatives being within the scope of the claim. Additionally, use of broader terms such as "comprises," "includes," and "having" should be understood to provide support for narrower terms such as "consisting of," "consisting essentially of," and "comprised substantially of." Accordingly, the scope of protection is not limited by the description set out above, but is defined by the claims that follow, and includes all equivalents of the subject matter of the claims.

In the preceding description, reference may be made to the spatial relationship between the various structures illustrated in the accompanying drawings, and to the spatial orientation of the structures. However, as will be recognized by those skilled in the art after a complete reading of this disclosure, the structures described herein may be positioned and oriented in any manner suitable for their intended purpose. Thus, the use of terms such as "above," "below," "upper," "lower," "inner," "outer," "left," "right," "upward," "downward," "inward," "outward," "horizontal," "vertical," etc., should be understood to describe a relative relationship between the structures and/or a spatial orientation of the structures. Those skilled in the art will also recognize that the use of such terms may be provided in the context of the illustrations provided by the corresponding figure(s).

Additionally, terms such as "approximately," "generally," "substantially," and the like should be understood to allow for variations in any numerical range or concept with which they are associated and encompass variations on the order of 25% (e.g., to allow for manufacturing tolerances and/or deviations in design). For example, the term "generally parallel" should be understood as referring to configurations in with the pertinent components are oriented so as to define an angle therebetween that is equal to 180° ± 25% (e.g., an angle that lies within the range of (approximately) 135° to (approximately) 225°). The term "generally parallel" should thus be understood as referring to encompass configurations in which the pertinent components are arranged in parallel relation.

Although terms such as "first," "second," "third," etc., may be used herein to describe various operations, elements, components, regions, and/or sections, these operations, elements, components, regions, and/or sections should not be limited by the use of these terms in that these terms are used to distinguish one operation, element, component, region, or section from another. Thus, unless expressly stated otherwise, a first operation, element, component, region, or section could be termed a second operation, element, component, region, or section without departing from the scope of the present disclosure.

Each and every claim is incorporated as further disclosure into the specification and represents embodiments of the present disclosure. Also, the phrases "at least one of A, B, and C" and "A and/or B and/or C" should each be interpreted to include only A, only B, only C, or any combination of A, B, and C.

## Claims

1. A lens guard (220) of a sensor system (106), comprising:
a film (222) through which a sensor (108) is configured to capture images within a field of view (110) of a lens (212) of the sensor (108);
a cleaning tool (226A, 226B) configured to clean one or more surfaces of the film (222); and
a roller (224A, 224B) configured to move the film (222) with respect to the lens (212) and to guide the film (222) to clean the one or more surfaces of the film (222) with the cleaning tool (226A, 226B).

2. The lens guard (220) of claim 1, wherein the film (222) includes an inner surface (246) that is configured to face the lens (212) and an opposing outer surface (248) that is exposed to environmental elements; and
wherein the cleaning tool (226A, 226B) is configured to clean the opposing outer surface (248) of the film (222).

3. The lens guard (220) of claim 1 or claim 2, wherein the film (222) is at least partially wound around the roller (224A, 224B), and the roller (224A, 224B) is configured to wind and unwind the film (222) to move the film (222) with respect to the lens (212).

4. The lens guard (220) of any one of the preceding claims, wherein the roller (224A, 224B) is coupled to a drive system (234) that is configured to rotate the roller (224A, 224B) to wind and unwind the film (222).

5. The lens guard (220) of any one of the preceding claims, wherein the film (222) is configured to pass through a bezel (216) of the sensor (108) such that the film (222) is positioned between the bezel (216) and the lens (212).

6. The lens guard (220) of any one of the preceding claims, wherein the field of view (110) of the lens (212) is configured to extend through the film (222).

7. The lens guard (220) of any one of the preceding claims, wherein a distance between the film (222) and the lens (212) remains substantially constant during movement of the film (222).

8. The lens guard (220) of any one of the preceding claims, wherein the film (222) includes a first portion through which the sensor (108) is configured to capture the images and a second portion connected to the first portion and located outside of the field of view (110) of the lens (212); and
wherein the roller (224A, 224B) is configured to move the film (222) so that the first portion is guided through the cleaning tool (226A, 226B) and the second portion is moved so that the sensor (108) is configured to capture the images through the second portion.

9. The lens guard (220) of any one of the preceding claims, wherein the roller (224A, 224B) is configured to translate the film (222) along a plane (225) that is located adjacent to, and spaced apart from, the lens (212).

10. The lens guard (220) of any one of the preceding claims, wherein the cleaning tool (226A, 226B) is positioned between the lens (212) of the sensor (108) and the roller (224A, 224B).

11. The lens guard (220) of claim 10, wherein the cleaning tool (226A, 226B) is a cleaning roller, and the film (222) is configured to be guided along the roller to remove debris, moisture, or both from the one or more surfaces of the film (222).

12. The lens guard (220) of any one of the preceding claims, wherein the cleaning tool (226A, 226B) is configured to rotate about an axis of rotation (250A, 250B) of the cleaning tool (226A, 226B) and the roller (224A, 224B) is configured to rotate about an axis of rotation (252A, 252B) of the roller (224A, 224B); and
wherein the axis of rotation (250A, 250B) of the cleaning tool (226A, 226B) is substantially parallel to the axis of rotation (252A, 252B) of the roller (224A, 224B).

13. The lens guard (220) of claim 12, wherein a direction of movement (228) of the film (222) is substantially perpendicular to at least one of the axis of rotation (250A, 250B) of the cleaning tool (226A, 226B) or the axis of rotation (252A, 262B) of the roller (224A, 224B).

14. The lens guard (220) of any one of the preceding claims, wherein the roller (224A, 224B) is coupled to a drive system (234) that is configured to rotate the roller (224A, 224B) to move the film (222) with respect to the lens (212).

15. A method of cleaning the film (222) of the lens guard (220) of the sensor system (106) of any one of the preceding claims, comprising:
capturing, via the sensor (108) of the sensor system (106), the images within the field of view (110) of the lens (212), wherein the sensor (108) is configured to capture the images within the field of view (110) through a first portion of the film (222);
determining, via the sensor system (106), whether the first portion of the film (222) requires cleaning; and
responsive to determining that the first portion of the film (222) requires cleaning, moving the film (222) so that the first portion of the film (222) is cleaned by the cleaning tool (226A, 226B) and a second portion of the film (222) is moved so that the sensor (108) is configured to capture the images within the field of view (110) through the second portion of the film (222).

## Amended claims

### Amended claims in accordance with Rule 137(2) EPC.

1. A lens guard (220) of a sensor system (106), comprising:
a film (222) through which a sensor (108) is configured to capture images within a field of view (110) of a lens (212) of the sensor (108);
a cleaning tool (226A, 226B) configured to clean one or more surfaces of the film (222); and
a roller (224A, 224B) configured to move the film (222) with respect to the lens (212) and to guide the film (222) to clean the one or more surfaces of the film (222) with the cleaning tool (226A, 226B),
**characterized in that** the cleaning tool (226A, 226B) includes one or more bristles, one or more brushes, one or more sponges, or a combination thereof to remove the debris and/or moisture from the film (222).

2. The lens guard (220) of claim 1, wherein the film (222) includes an inner surface (246) that is configured to face the lens (212) and an opposing outer surface (248) that is exposed to environmental elements; and
wherein the cleaning tool (226A, 226B) is configured to clean the opposing outer surface (248) of the film (222).

3. The lens guard (220) of claim 1 or claim 2, wherein the film (222) is at least partially wound around the roller (224A, 224B), and the roller (224A, 224B) is configured to wind and unwind the film (222) to move the film (222) with respect to the lens (212).

4. The lens guard (220) of any one of the preceding claims, wherein the roller (224A, 224B) is coupled to a drive system (234) that is configured to rotate the roller (224A, 224B) to wind and unwind the film (222).

5. The lens guard (220) of any one of the preceding claims, wherein the film (222) is configured to pass through a bezel (216) of the sensor (108) such that the film (222) is positioned between the bezel (216) and the lens (212).

6. The lens guard (220) of any one of the preceding claims, wherein the field of view (110) of the lens (212) is configured to extend through the film (222).

7. The lens guard (220) of any one of the preceding claims, wherein a distance between the film (222) and the lens (212) remains substantially constant during movement of the film (222).

8. The lens guard (220) of any one of the preceding claims, wherein the film (222) includes a first portion through which the sensor (108) is configured to capture the images and a second portion connected to the first portion and located outside of the field of view (110) of the lens (212); and
wherein the roller (224A, 224B) is configured to move the film (222) so that the first portion is guided through the cleaning tool (226A, 226B) and the second portion is moved so that the sensor (108) is configured to capture the images through the second portion.

9. The lens guard (220) of any one of the preceding claims, wherein the roller (224A, 224B) is configured to translate the film (222) along a plane (225) that is located adjacent to, and spaced apart from, the lens (212).

10. The lens guard (220) of any one of the preceding claims, wherein the cleaning tool (226A, 226B) is positioned between the lens (212) of the sensor (108) and the roller (224A, 224B).

11. The lens guard (220) of claim 10, wherein the cleaning tool (226A, 226B) is a cleaning roller, and the film (222) is configured to be guided along the roller to remove debris, moisture, or both from the one or more surfaces of the film (222).

12. The lens guard (220) of any one of the preceding claims, wherein the cleaning tool (226A, 226B) is configured to rotate about an axis of rotation (250A, 250B) of the cleaning tool (226A, 226B) and the roller (224A, 224B) is configured to rotate about an axis of rotation (252A, 252B) of the roller (224A, 224B); and
wherein the axis of rotation (250A, 250B) of the cleaning tool (226A, 226B) is substantially parallel to the axis of rotation (252A, 252B) of the roller (224A, 224B).

13. The lens guard (220) of claim 12, wherein a direction of movement (228) of the film (222) is substantially perpendicular to at least one of the axis of rotation (250A, 250B) of the cleaning tool (226A, 226B) or the axis of rotation (252A, 262B) of the roller (224A, 224B).

14. The lens guard (220) of any one of the preceding claims, wherein the roller (224A, 224B) is coupled to a drive system (234) that is configured to rotate the roller (224A, 224B) to move the film (222) with respect to the lens (212).

15. A method of cleaning the film (222) of the lens guard (220) of the sensor system (106) of any one of the preceding claims, comprising:
capturing, via the sensor (108) of the sensor system (106), the images within the field of view (110) of the lens (212), wherein the sensor (108) is configured to capture the images within the field of view (110) through a first portion of the film (222);
determining, via the sensor system (106), whether the first portion of the film (222) requires cleaning; and
responsive to determining that the first portion of the film (222) requires cleaning, moving the film (222) so that the first portion of the film (222) is cleaned by the cleaning tool (226A, 226B) and a second portion of the film (222) is moved so that the sensor (108) is configured to capture the images within the field of view (110) through the second portion of the film (222).
